# EUROPEAN PATENT APPLICATION

(11) **EP 2 113 700 A2**
(43) Date of publication of application: **04.11.2009**
(21) Application number: 09005716.7
(22) Date of filing: 23.04.2009
(51) Int. Cl.: F16L 11/112, F16L 11/118, F16L 11/24, F16L 59/02, F16L 59/153

(54) **Thermally insulated hose and method for producing the same**

(30) Priority: 28.04.2008 JP 2008117570
(71) Applicant: TIGERS POLYMER CORPORATION, Osaka 560-0082 (JP)
(72) Inventor: Shindo, Nobuo, Kobe-shi Hyogo 651-2271 (JP); Fujimoto, Noriaki, Kobe-shi Hyogo 651-2271 (JP)
(74) Representative: Diehl & Partner

(57) **Abstract**

A method for producing a thermally insulated hose comprises the steps of (A) forming a cylindrical inner layer from a soft resin; (B) winding a reinforcing member helically around the inner layer for uniting with each other to form the flexible inner tube comprising the inner layer and the reinforcing member, the reinforcing member comprising a hard resin and protruding from an outer periphery of the inner layer toward an outer surface of the hose; (C) winding a thermal insulating elastic strip around an outer side of the flexible inner tube for forming a thermal insulating layer; and (D) forming an outer layer on an outermost side of the thermal insulating layer for immobilizing or fixing the thermal insulating strip. In the step (C), the thermal insulating strip is helically wound around the outer side of the flexible inner tube with arranging a cross section of the strip substantially parallel to the axial direction of the hose, with opposing or facing adjacent lateral edges of the strip to each other, with forming a gap between an inner surface of the strip and an outer surface of the inner layer, and with compressing the strip in a thickness direction at a contact area in which the strip contacts with the reinforcing member. The thermally insulated hose suppresses the protrusion of the inner layer inside the hose and the increase of flow resistance of a fluid even when the hose is bent.

## Description

### TECHNICAL FIELD

The present invention relates to a thermally insulated hose and a method for producing the thermally insulated hose. The present invention particularly relates to a thermally insulated hose comprising a flexible inner tube covered with a thermal insulating member or element and a method for producing the thermally insulated hose.

### BACKGROUND ART

Thermally insulated hoses having a surface covered with a thermal insulating member or element have been used as a hose for draining water from an air conditioner or a hose used for other apparatuses. Such known hoses include, e.g.,thermally insulated hosesdescribed in Japanese Patent Application Laid-Open No. 11/325336 (JP-11-325336A, Patent Document 1) and in Japanese Patent Application Laid-Open No. 11/90972 (JP-11-90972A, Patent Document 2).

Patent Document 1 discloses a thermally insulated hose comprising a flexible inner tube (which is generally called a conduit hose) and a thermal insulating layer formed on the outer peripheral (or outer circumferential) surface of the flexible inner tube by helically winding a strip having a sack-like structure in which a thermal insulating member or element is inserted around the outer surface of the flexible inner tube. Moreover, Patent Document 2 discloses a thermally insulated hose comprising a flexible inner tube and a thermal insulating layer formed on the outer peripheral surface (or outer periphery) of the flexible inner tube. The flexible inner tube comprises a hose inner layer and a hard member (reinforcing member) wound helically around the flexible inner tube to unite with each other, and the thermal insulating layer is formed by helically winding a foamed synthetic resin strip or tape in a semimolten state around the outer periphery of the flexible inner tube.
[Patent Document 1] JP-11-325336A
[Patent Document 2] JP-11-90972A

### DISCLOSURE OF THE INVENTION

### PROBLEMS TO BE SOLVED BY THE INVENTION

However, when a conduit hose is used as a flexible inner tube as described in Patent Document 1, an uneven or bumpy inner surface of the conduit hose tends to increase a flow resistance of a fluid (such as air or water) passing through the hose. For that reason, overcoming such a drawback has been desirable.

Moreover, when such a thermally insulated hose as described in Patent Document 2 is bent, the inner layer between the adjacent hard members united with the flexible inner tube sometimes protrudes inside the hose, with forming a pleat or folded structure. The protruded inner layer in the form of a pleat decreases an inner cross section area of the hose. Therefore, since the flow resistance of a fluid passing through the hose increases, there is a possibility that desirable performances of the hose cannot be achieved. In particular, when it is necessary to reduce an external or outer diameter of the hose on the ground of the design or installation of an apparatus, achieving both of a desirable thermal insulating property and flow resistance was difficult.

It is therefore an object of the present invention to provide a thermally insulated hose which has an inner layer prevented from protruding inside the hose and suppresses increase of the flow resistance even when the thermally insulated hose is bent, and a method for producing the same.

### MEANS TO SOLVE THE PROBLEMS

The inventor(s) of the present invention made intensive studies to achieve the above objects and finally found that a helical winding of a thermal insulating member or element having elasticity around an outer periphery of a hard reinforcing member (hard member) helically wound around an inner layer (i.e., an inner wall, a flexible inner tube) of a hose and united with the inner layer, forces or biases the reinforcing member inwardly in a radial direction, whereby the inner layer of the flexible inner tube is prevented from protruding inside the hose at bending operations of the hose. The present invention was accomplished based on the above findings.

The present invention includes a method for producing a thermally insulated hose comprising a flexible inner tube and a thermal insulating layer formed on an outer side of the flexible inner tube. The method comprises the steps of (A) forming a cylindrical inner layer (i.e., inner wall, inner tube) from a soft resin, the inner layer being as an inner wall of the hose; (B) winding a reinforcing member (hard member) helically around the inner layer for uniting with each other to form the flexible inner tube comprising the inner layer and the reinforcing member, the reinforcing member comprising a hard resin and protruding from an outer periphery of the inner layer toward an outer surface of the hose; (C) winding a thermal insulating elastic strip around an outer side of the flexible inner tube for forming a thermal insulating layer; and (D) forming an outer layer on an outer side of the thermal insulating layer for immobilizing or fixing the thermal insulating strip. In the step (C), the thermal insulating strip is helically wound around the outer side of the flexible inner tube (C-1) with arranging a cross section of the thermal insulating strip substantially parallel to the axial direction of the hose, (C-2) with opposing or facing adjacent lateral edges of the thermal insulating strip to each other, (C-3) with compressing the thermal insulating strip in a thickness direction for biasing the reinforcing member radially-inwardly at a contact area in which the thermal insulating strip contacts with the reinforcing member, and/or (C-4) with forming a gap between an outer surface of the inner layer and an inner surface of the thermal insulating strip at a non-contacted area in which the thermal insulating strip does not contact with the reinforcing member.

In the present invention, in the step (C), the thermal insulating strip may be wound with applying a tension thereto. Moreover, in the step (C) , the thermal insulating strip which has been compressed in a thickness direction thereof may be helically wound around the outer side of the flexible inner tube, and the compressed thermal insulating strip may be then released or liberated.
Furthermore, in the step (C) , the thermal insulating strip may be wound in the substantially same direction as the spirally or helically winding direction of the reinforcing member. The present invention also includes a thermally insulated hose, which comprises a flexible inner tube and a thermal insulating layer formed on an outer side of the flexible inner tube. In the thermally insulated hose, the flexible inner tube comprises a cylindrical inner layer and a reinforcing member (hard member). The cylindrical inner layer comprises a soft resin and forms an inner wall or inner tube of the hose. The reinforcing member comprising a hard resin is wound helically around the inner layer, and united with the inner layer and protrudes from an outer periphery of the inner layer toward an outer surface of the hose. The thermal insulating layer is formed with a thermal insulating elastic strip helically wound around the outer side of the flexible inner tube. The thermally insulated hose further comprises an outer layer formed on an outer side of the thermal insulating layer and fixing the thermal insulating elastic strip. The thermal insulating elastic strip is helically wound with a substantially parallel arrangement of a cross section of the thermal insulating strip to the axial direction of the hose, with opposing or facing adjacent lateral edges of the thermal insulating strip to each other, and the thermal insulating strip is compressed in a thickness direction for biasing the reinforcing member radially-inwardly at a contact area in which the thermal insulating strip contacts with the reinforcing member, and a gap is formed between an outer surface of the inner layer and an inner surface of the thermal insulating strip at a non-contacted area
in which the thermal insulating strip does not contact with the reinforcing member. Moreover in the above-mentioned thermally insulated hose, a helical winding direction of the thermal insulating strip may be the same as a helical winding direction of the reinforcing member.

### EFFECTS OF THE INVENTION

The present invention provides a thermally insulated hose which suppresses the protrusion of the inner layer inside the hose with forming a pleat or folded structure and the increase of flowresistance of a fluidpassing through the hose when the hose is bent.

Moreover, according to a preferred embodiment of the present invention, an advantage that such a hose is positively and efficiently produced is achieved.
According to another preferred embodiment of the present invention, the hose inner layer can be prevented from protruding inside the hose more advantageously.

### BRIEF DESCRIPTION OF THE DRAWINGS

Fig. 1 is a view showing a structure of a thermally insulated hose obtained in accordance with an embodiment of the present invention.
Fig. 2 is an enlarged cross sectional view of part of the thermally insulated hose illustrated in Fig 1.
Fig. 3 is a schematic view showing a method for producing a thermally insulated hose in accordance with an embodiment of the present invention.
Fig. 4 is a schematic view showing another method for producing a thermally insulated hose in accordance with an embodiment of the present invention.

### DETAILED DESCRIPTION OF THE INVENTION

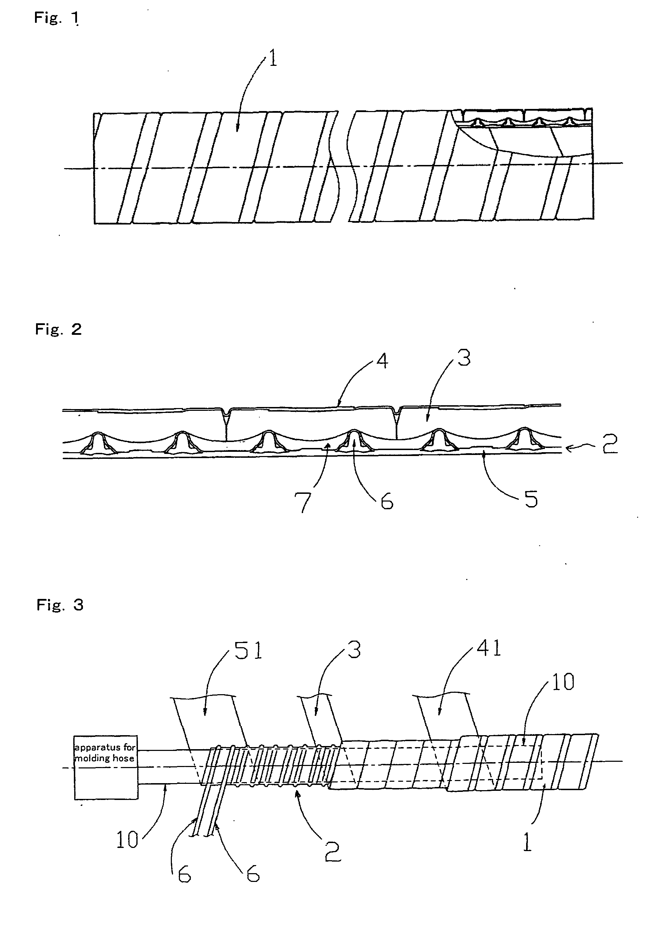

Hereinafter, with reference to the drawings, an embodiment of the present invention will be explained. Fig. 1 is a view showing a structure of a thermally insulated hose 1 obtained in accordance with an embodiment of the present invention, and Fig. 2 is an enlarged cross sectional view of part of the thermally insulated hose illustrated in Fig. 1.

The thermally insulated hose 1 comprises a flexible inner tube 2, a thermal insulating strip or tape 3 (hereinafter, may simply be referred to as "thermal insulating member or element 3") helically wound around an outer periphery of the flexible inner tube, and an outer layer 4 formed on an outer periphery of the thermal insulating strip or tape 3.

The flexible inner tube 2 comprises an inner layer 5 comprising a soft resin and forming an inner wall surface of the hose, and a reinforcing member 6 comprising a hard resin and wound helically around the outer periphery of the inner layer 5. The inner layer 5 comprises a soft thermoplastic resin such as a plasticized or soft vinyl chloride resin and is formed into a cylindrical shape or configuration having an inner surface which is almost smooth along an axis line of the hose. The reinforcing member 6 comprises a hard thermoplastic resin such as a non-plasticized or hard vinyl chloride resin and has a cross section of an inverted T-shape or configuration. The reinforcing member 6 is united with the inner layer 5 by winding the reinforcing member 6 helically around the outer peripheral surface of the inner layer 5 with projecting or protruding toward the outside of the hose from the outer periphery of the inner layer 5. In the embodiment, the reinforcing members 6 are embedded in the inner layer 5 or covered with a tape forming the inner layer 5 with overlapping the tape, in the form of spiral two lines.

The thermal insulatingmember or element 3 comprises a strip or tape comprising a foamed resin and having an almost rectangular cross section in a width direction thereof. The strip or tape has an elasticity. In the embodiment, the thermal insulating member or element 3 comprises a foamed cross-linked polyethylene. In view of a preferable thermal insulating property and elasticity, the expansion rate of the foamed resin may preferably be about 10 to 50% or 2 to 10 times and particularly preferably about 20 to 40% or 2.5 to 5 times. With respect to the formed structure of the formed resin, it is more preferred to use a formed resin having a closed-cell or isolated cell structure mainly than a foamed resin having an open-cell structure or continuous cell structure mainly. In the case of using the foamed resin strip or tape having an open-cell structure as a main cell structure, it is preferred to use a foamed resin strip having a skin layer as a surface layer. This embodiment uses a foamed cross-linked polyethylene having an expansion rate of about 30% or 3.3 times and a cell structure similar to a closed-cell structure.

The thermal insulating member or element 3 is helically wound around the outer periphery of the flexible inner tube 2 with arranging the cross section of the thermal insulating member or element 3 parallel to the axis direction of the hose. Further, the adjacent lateral edges or sides of the thermal insulating member or element 3, i.e., the strip or tape of the foamed resin, are confronted and contacted with each other to form a thermal insulating layer. In view of the thermal insulating property of the hose, it is preferred that the adjacent lateral edges or sides of the thermal insulating member of element 3 be contacted with each other firmly or intimately. However, as long as the adjacent sides of the thermal insulating member or element 3 are disposed in parallel with each other, there may be a gap or space therebetween.

Moreover, according to the production method described below, the thermal insulating member or element 3 is helically wound around the outer periphery of the flexible inner tube 2 with or while compressing the thermal insulating member or element 3 in a thickness direction at an contact area in which the thermal insulating member or element 3 contacts with the reinforcing member 6 and with or while forming a space or gap 7 at a non-contacted area in which the thermal insulating member or element 3 does not contact with the reinforcing member 6 and which positions between the adjacent reinforcing members 6 and 6.

The outer layer 4 is a film-like layer comprising a soft thermoplastic resin such as a plasticized or soft vinyl chloride resin. The outer layer 4 fixes or immobilizes the thermal insulating member or element 3 wound helically on or around the flexible inner tube 2 in order to prevent the thermal insulating member or element 3 from loosening.

Hereinafter, with reference to Fig. 3, a method for producing a thermally insulated hose 1 will be explained. The thermally insulated hose 1 is produced by winding tape-like (or strip-like) shaped materials for forming each layer helically around a known hose-molding shaft 10 to unite with one another, with supplying or feeding each of the tape-like shaped materials to the hose-molding shaft 10.

A resin material for the hose inner layer 5 is extruded, in a molten state, to form a wide tape (i.e., a tape 51). The resulting wide tape is fed, in a semimolten state, to the upstream side of the molding shaft 10, and is helically wound around the molding shaft 10 with overlapping the adjacent sides of the tape 51 each other. In this manner, the inner layer 5 having a cylindrical shape and an almost smooth inner surface is formed.

A resin material for the reinforcing member 6 is extruded, in a molten state, to form a string or linear element having a desirable cross section of the reinforcing member 6. The resulting string or linear element is fed, in a semimolten state, to a downstream side of the molding shaft 10 relative to the tape 51 and helically wound on or around the tape 51 or inner layer 5 on the molding shaft 10 to unite with each other. In the winding operations, the reinforcing member 6 is fed to a overlapping (enwrapping or enveloping) region or area of the tape 51 forming the inner layer 5, the overlapping region or area being formed by an area which is the upstream side in a width direction of the precedingly wound tape and an area which is the downstream side in a width direction of the succeedingly or subsequently wound tape, with positioning the two lines of the reinforcing member at the region or area to be enwrapped or enveloped by the succeedingly wound tape 51, and the reinforcing member 6 can be embedded in the overlapping region of the tape or covered or enwrapped with the succeeding tape. The hose inner layer 5 and the reinforcing member 6 which are independently in the semimolten state are melt-bonded to each other to form the flexible inner tube 2.

Successively, the thermally insulating member or element 3 is helically wound on or around the outer periphery of the flexible inner tube 2. In this step, the cross section of the thermal insulating member or element 3 is arranged substantially parallel to the axial direction of the hose and the adjacent lateral edges or sides of the thermal insulating member or element 3 are confronted (faced) or contacted with each other, and thus a strip or tape of a foamed resin obtained by slit-processing a foamed resin sheet having a predetermined thickness into a predetermined width is fed to the winding operations. In the step of winding the thermal insulating member or element 3, a tensile force (tension) is applied to the thermal insulating member or element 3. The tensile force is adjusted or controlled to compress the thermal insulating member or element 3 in a thickness direction thereof at a contact area in which the thermal insulating member or element 3 contacts with the reinforcing member 6 and to form the space or gap 7 between the outer surface of the inner layer 5 and the inner surface of the thermal insulating member or element 3 at the non-contacted area or region in which the thermal insulating member or element 3 does not contact with the adjacent reinforcing members 6 and 6. In this operations, it is preferred that the lateral edges or sides of the thermal insulating member or element 3 confront or face (or contact) with each other at an intermediate or middle area between the adjacent reinforcing members 6 and 6 in the axial direction of the hose.

Successively, the outer layer 4 is formed on the outer periphery of the thermal insulating member or element 3. A resin material for the outer layer 4 is extruded, in a molten state, to form a wide tape (i.e. , a tape 41). The resulting wide tape is fed, in a semimolten state, to the outer surface of the thermal insulating member or element 3, and is helically wound on or around with overlapping the adjacent sides of the tape 41 each other. The semimolten tape 41 forms the outer layer 4 by melt-bonding the overlapping region of the semimolten tape 41 to each other.

In the production steps mentioned above, the thermally insulated hose is given a change and advantages as follows.

In the step of producing the flexible inner tube 2, which is the first half of the all steps, the flexible inner tube 2 having a smooth and a cylindrically-shaped inner surface is obtained, and in the next winding step for winding the thermal insulating member or element, the deformation or distortion of the inner layer 5 of the flexible inner layer 2 appears. That is, since the thermal insulating member or element 3 is wound on or around the inner layer 5 and the thermal insulatingmember or element 3 is compressed in a thickness direction by the hard reinforcing member 6, a counteraction or reaction force (a force generated by the compression of the thermal insulating member or element 3 correspondingly) acts on the hard reinforcing member 6 to compress in a radial direction (i.e., in the radially shrinking direction in the diameter) at the whole circumference. This force changes a helical shape or form of the hard reinforcing member 6 with being slightly extended or elongated in the axial direction of the hose and being slightly contracted in the radial direction. On the other hand, since the non-contacted area between the adjacent reinforcing members 6 and 6 of the inner layer 5 is distant from the thermal insulating member or element 3 due to the existence of the space or gap 7 therebetween, a compression force does not act on the inner layer 5 in the radial direction, and therefore, in such an area, the hose inner layer 5 tends to maintain the original diameter and peripheral length. As a result, the united area where the hard reinforcing member 6 is united with the inner layer 5 tends to be deformed or compressed inwardly in the radial direction to some degree, and the intermediate area between the reinforcing members 6 and 6 tends to protrude outwardly in the radial direction to some extent.

Hereinafter, the deformation of the inner layer 5 of the hose produced by an above-mentioned manner at being expanded, contracted, or bent will be explained. When the hose is expanded, contracted, or bent, the distance between or interval of the adjacent reinforcing members 6 and 6 is reduced to slacken or loosen the inner layer 5 arranged between the adjacent reinforcing members 6 and 6. However, as explained mentioned above, the inner layer 5 tends to be radially-inwardly compressed at the united area in which the inner layer 5 is united with the hard reinforcing member 6 and tends to be protruded radially-outwardly at the intermediate area in which the inner layer 5 is deposed between the adjacent reinforcing members 6 and 6. Therefore, a resulting slack or loose of the inner layer 5 between the reinforcing members 6 and 6 is surely protruded radially-outwardly when the hose is bent or deformed.

Accordingly, when the thermally insulated hose produced by the method of the present invention is bent, the inner layer of the flexible inner tube is surely prevented from protruding inside the hose. Therefore, an increase in the flow resistance to a fluid passing through the hose is prevented.

Moreover, since the hose inner layer 5 is apart from the thermal insulating member or element 3, the deformation of the inner layer 5 is not hindered by the thermal insulating member or element 3. This results in an advantage to bending the hose with a less force, i.e. , an advantage to enhancing the flexibility of the thermally insulated hose.

The method for producing the thermally insulated hose of the present invention is explained as mentioned above. However, the present invention is not limited to the embodiment mentioned above. The present invention may be modified or embodied in still other ways mentioned below without departing from the characteristics of the present invention.

In the winding step of winding the thermal insulating member or element 3 in the embodiment mentioned above, although the thermal insulating member or element 3 is compressed in a thickness direction thereof at a contact area of the thermal insulating member or element 3 with the reinforcing member 6 by applying a tension to the thermal insulating member or element 3, other manners may also be used. For example, a thermally insulated duct having a structure similar to that of the hose may be obtained by
(1) compressing the thermal insulating member or element 3 comprising a foamed resin with a roller in a thickness direction just before winding the thermal insulating member or element 3 helically on or around the outer periphery of the flexible inner tube 2; (2) winding the thermal insulating member or element 3 with a compression state helically around the outer periphery of the flexible inner tube 2; and (3) releasing or liberating the compressed thermal insulating member of element 3 spontaneously. In the case of winding the thermal insulating member or element by this manner, the preferred thermal insulating member or element as the insulating material is a strip or tape of a foamed resin having a continuous- or open-cell structure and a skin layer, as a main cell structure.

In addition to the thermal insulating member or element comprising a foamed resin explained in the embodiment mentioned above, other thermal insulating materials may be used for the thermal insulating member or element as long as the materials have an appropriate thermal insulating property and elasticity. For example, other foamed resins, a fiber assemble or aggregation such as a bulky nonwoven fabric, and a sack-like thermal insulating member or element having a thermal insulating material inserted or installed therein may be used as or for the thermal insulating member or element.

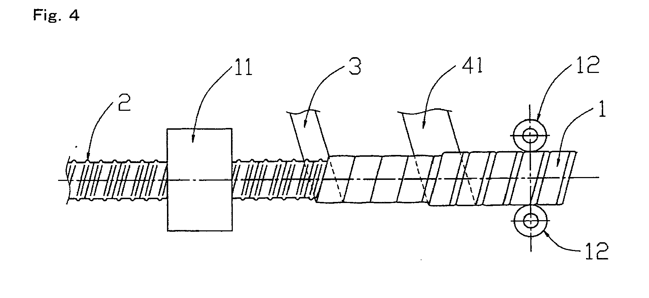

In the embodiment mentioned above, the illustrated method for producing the thermally insulated hose conducts all of the sequential steps continuously on one hose-molding shaft. These steps may be separately conducted, and in particular, the first half of the steps (i.e., the step for the formation of the flexible inner tube 2) and the last half of the steps (i.e., the step for the formation of the thermal insulating layer and the outer layer) may be separately conducted. That is, the step for forming the flexible inner tube 2 on a first hose-molding shaft (i.e., the formation steps of the inner layer 5 and the reinforcing member 6 with uniting the inner layer 5 and the member 6 with each other) is conducted to obtain a flexible inner tube 2 firstly. Thereafter, as shown in Fig. 4, the obtained flexible inner tube 2 is preferably cut at a predetermined length. The resulting flexible inner tube 2 is supplied to a rotary feeding apparatus 11, and the apparatus 11 sends the flexible inner tube 2 toward a hose-supporting roller 12 in the longitudinal direction of the hose with rotating the flexible inner tube 2. Further, the thermal insulating member or element 3 and the tape material 41 for the outer layer 4 are supplied on the flexible inner tube 2 with sending the flexible inner tube 2 and helically wound around the flexible inner tube 2 to unite one another. In this manner, the thermally insulating hose 1 can be obtained.

When the step for forming or molding the flexible inner tube 2 and the step for forming the thermal insulating layer and the outer layer are separately conducted in this manner, it is possible to select independently the feeding pitch, rotational speed, and feeding speed of each of the members or elements between or in the former step and the latter step. Therefore, the thermally insulated hose can be more efficiently produced.

Even in the case of conducting the steps separately as mentioned above, it is preferred that the winding direction of the flexible inner tube (clockwise or anticlockwise) is the same as a winding direction of the thermal insulating member or element 3 (clockwise or anticlockwise). Helical winding of the members or elements in the same direction further prompts the deformation in a spiral configuration of the hard reinforcing member 6 (or in the spirally wound hard reinforcing member 6), and the inner layer of the hose is positively prevented from protruding inside the hose when the hose is bent.

Various modifications mentioned below may be applied to the flexible inner tube 2 of the thermally insulated hose 1 produced according to the present invention. It is not necessary that the reinforcing member 6 be embedded in the inner layer 5 (or in the overlapping area of the inner layer), and the reinforcing member 6 may be united with the outer periphery of the inner layer 5 by adhesion (bonding) or melt-bonding to each other. Moreover, it is not necessary that the shape of the cross section of the reinforcing member 6 be the inverted T-shape as the above-mentioned embodiment. The shape or configuration of the reinforcing member 6 in cross section is not particularly limited to a specific one as long as the reinforcing member 6 projects or protrudes (or stick out) at a predetermined height from the inner layer 5 outwardly in the cross section of the hose, for compressing the thermal insulating member or element 3 in a thickness direction by a reinforcing member and for forming a space or gap between the inner layer and the thermal insulating layer at an intermediate area or region between the adjacent reinforcing members 6 and 6 at the helical winding of the thermal insulating member or element 3. The cross sectional shape or configuration of the reinforcing member 6 may include, for example, a triangular, a circular, a half circle, and a rectangular configuration. Additionally, the reinforcing member 6 may be a hollow member or a hollow member having a metal wire (e.g., a steel wire) inserted therein.

Furthermore, it is not necessary that the inner layer 5 be formed by overlapping the adjacent sides of the tape 51 in a semimolten state. For example, the inner layer 5 may be formed by winding the tape 51 helically with confronting or facing the adjacent lateral edges or sides of the tape 51 with or to each other. In this case, the contact area of the lateral sides of the tape 51 may be bonded or united to each other with the reinforcing member 6 disposed on or across the contact area.

Additionally, in the embodiment mentioned above, the reinforcing members 6 are helically arranged in a parallel-two-line form, and the single thermal insulating member or element 3 has a width covering the above-mentioned reinforcing member 6. However, the present invention is not limited to the embodiment mentioned above, and the number of the lines of the reinforcing member 6 may be changed. In view of the molding speed of the hose, it is preferred that the reinforcing member 6 be in the form of a multi-line of not less than 3. Moreover, when the flexible inner tube 2 and the thermal insulating member or element 3 are formed by helical winding of the member or elements on one hose-molding shaft simultaneously, it is preferred that the reinforcing member 6 in the multi-line form be covered by the single width of the thermal insulating member or element 3. When the step of forming the flexible inner tube 2 and the step of winding the thermal insulating member or element 3 are separately or independently conducted, use of a thermal insulating member or element having a broader width enough for covering the reinforcing member 6 in the multi-line form having a number as many as possible makes it possible to more promote efficiency of the winding step of the thermal insulating member or element and the forming step of the outer layer.

For the outer layer 4 of the thermally insulated hose 1 produced by the present invention, elements or members having various shapes or forms may be used as long as the elements or members positively fix or immobilize the thermal insulating member or element 3 of the hose. That is, the adjacent sides of the tape 41 for the above-mentioned outer layer may be melt-bonded to each other or adhered (or bonded) to each other with an adhesive or cohesive agent. Furthermore, as long as the outer layer can fix or immobilize the thermal insulating member or element 3, it is not essential that the outer layer 4 covers the whole outer periphery of the thermal insulating member or element 3. For example, an adhesive tape having a width smaller than the thermal insulating member or element 3 may be wound helically around the thermal insulating member or element 3 to cover or bridge an area in which the adjacent lateral sides of the thermal insulating member or element 3 confront or contact with each other, for forming an outer layer fixing or immobilizing the thermal insulating member or element 3. Additionally, in the helical winding operations of the outer layer 4, a tension may be applied to the tape 41 for constricting or fastening the thermal insulating member or element 3 by the outer layer 4. In such a manner, the advantages of the present invention are provided reliably.

Various thermoplastic resin materials may be used for the inner layer 5, the hard reinforcing member 6, and the outer layer 4, each constituting the thermally insulated hose of the present invention, in addition to the vinyl chloride resin described in the above-mentioned embodiment. A material to be used for the inner layer 5 or the outer layer 4 may include, for example, a thermoplastic resin having a relatively low hardness (e.g., a low-density polyethylene resin such as a linear low-density polyethylene resin, an ethylene-vinyl acetate copolymer, and a vinyl acetate resin) and a thermoplastic elastomer (such as an olefinic thermoplastic elastomer, a styrenic thermoplastic elastomer, or a polyurethane-series thermoplastic elastomer). As a material for the hard reinforcing member 6, there may include, for example, a thermoplastic resin having a relatively high hardness (such as a high-density polyethylene resin, a polypropylene resin, a polyethylene terephthalate (PET) resin, or a polybutylene terephthalate (PBT) resin). It is preferable to select the material for the inner layer 5 and the material for the hard reinforcing member 6 which can be thermally melt-bonded to each other. It is preferred that the material for the outer layer 4 can be thermally melt-bonded to the thermal insulating member or element 3.

Moreover, it is preferable to select the material for the inner layer 5 having a thermal expansion rate lower than the material for the hard reinforcing member 6. In such a selection of the materials, the hard reinforcing member 6 tends to contract greater than the inner layer 5 with cooling the flexible inner tube 2 formed on the hose-molding shaft 10. Therefore, the hard reinforcing member 6 is pressed or compressed by the thermal insulating member or element 3 in a radial direction (or inward direction) to promote advantageously a desirable deformation (or change in the shape or form, i.e., inward deformation at the united area of the hard reinforcing member and the inner layer and outward protrusion at the intermediate area between of the hard reinforcing members) of the inner surface of the flexible inner tube 2, and thus more remarkable effects can be achieved.

### INDUSTRIAL APPLICABILITY

The prevent invention provides a thermally insulated hose preventing the inner layer of the flexible inner tube from protruding inside the hose and, even when the hose is bent, suppressing the increase of the flow resistance of a fluid. Therefore, the thermally insulated hose is useful particularly in a field which requires a thermally insulated hose installed or used in a limited or restricted piping space.

## Claims

1. A method for producing a thermally insulated hose comprising a flexible inner tube and a thermal insulating layer formed on an outer side of the flexible inner tube, which comprises the steps of
(A) forming a cylindrical inner layer (5) from a soft resin (51), the inner layer being as an inner wall of the hose;
(B) winding a reinforcing member (6) helically around the inner layer for uniting with each other to form the flexible inner tube (2) comprising the inner layer (5) and the reinforcing member (6), the reinforcing member (6) comprising a hard resin and protruding from an outer periphery of the inner layer (5) toward an outer surface of the hose;
(C) winding a thermal insulating elastic strip (3) around an outer side of the flexible inner tube (2) for forming a thermal insulating layer; and
(D) forming an outer layer (4) on an outer side of the thermal insulating layer for immobilizing or fixing the thermal insulating strip,
wherein in the step C, the thermal insulating strip is helically wound around the outer side of the flexible inner tube (C-1) with arranging a cross section of the thermal insulating strip substantially parallel to the axial direction of the hose, (C-2) with opposing or facing adjacent lateral edges of the thermal insulating strip to each other, (C-3) with compressing the thermal insulating strip in a thickness direction for biasing the reinforcing member radially-inwardly at a contact area in which the thermal insulating strip contacts with the reinforcing member, and (C-4) with forming a gap between the outer surface of the inner layer and the inner surface of the thermal insulating strip at a non-contacted area in which the thermal insulating strip does not contact with the reinforcing member.

2. The method according to claim 1, wherein in the step C, the thermal insulating strip is wound with applying a tension thereto.

3. The method according to claim 1 or 2, wherein in the step C, the thermal insulating strip which has been compressed in a thickness direction thereof is helically wound around the outer side of the flexible inner tube, and the compressed thermal insulating strip is then released or liberated.

4. The method according to one of claims 1 to 3, wherein in the step C, the thermal insulating strip is wound in the substantially same direction as the spirally winding direction of the reinforcing member (6).

5. A thermally insulated hose, which comprises a flexible inner tube (2) and a thermal insulating layer (3) formed on an outer side of the flexible inner tube (2), wherein the flexible inner tube (2) comprises a cylindrical inner layer (5) and a reinforcing member (6), the inner layer (5) comprises a soft resin and forms an inner wall of the hose, and the reinforcing member (6) comprises a hard resin and is wound helically around the inner layer (5) and united with the inner layer (5) and protrudes from an outer periphery of the inner layer (5) toward an outer surface of the hose, the thermal insulating layer (3) is formed with a thermal insulating elastic strip helically wound around the outer side of the flexible inner tube (2), the hose further comprises an outer layer (4) formed on an outer side of the thermal insulating layer (3) and fixes the thermal insulating elastic strip, wherein the thermal insulating elastic strip is helically wound with a substantially parallel arrangement of a cross section of the thermal insulating strip to the axial direction of the hose and with opposing or facing adjacent lateral edges of the thermal insulating strip to each other, the thermal insulating strip is compressed in a thickness direction for biasing the reinforcing member (6) radially-inwardly at a contact area in which the thermal insulating strip contacts with the reinforcing member (6), and a gap (7) is formed between an outer surface of the inner layer (2) and an inner surface of the thermal insulating strip at a non-contacted area in which the thermal insulating strip does not contact with the reinforcing member (6).

6. The thermally insulated hose according to claim 5,
wherein a helical winding direction of the thermal insulating strip is the same as a helical winding direction of the reinforcing member (6).

7. An apparatus for manufacturing a thermally insulated hose (1), comprising:
means (10) for forming a cylindrical inner layer (5) from a soft resin;
means for winding a reinforcing member (6) helically around the inner layer (5) for uniting with each other to form a flexible inner tube (2) comprising the inner layer (5) and the reinforcing member (6), the reinforcing member (6) comprising a hard resin and
protruding from an outer periphery of the inner layer (2) toward an outer surface of the hose (1);
means for winding a thermally insulating elastic strip around an outer side of the flexible inner tube for forming a thermal insulating layer (3); and
means for forming an outer layer (4) on an outer side of the thermally insulating layer (3) for immobilizing or fixing the thermal insulating strip.

8. The apparatus according to claim 7, wherein the means for winding a thermally insulating elastic strip are adapted for winding the thermally insulating strip helically around the outer side of the flexible inner tube while arranging a cross section of the thermal insulating strip substantially parallel to the axial direction of the hose, while opposing or facing adjacent lateral edges of the thermal insulating strip to each other, while compressing the thermal insulating strip in a thickness direction for biasing the reinforcing member radially-inwardly at a contact area in which the thermal insulating strip contacts with the reinforcing member, and while forming a gap between the outer surface of the inner layer and the inner surface of the thermal insulating strip at a non-contacted area in which the thermal insulating strip does not contact with the reinforcing member.

9. The apparatus according to claim 7 or 8, wherein the hose is the one according to claim 5 or 6.

10. Use of a thermally insulated hose having a thermally insulating element or member having elasticity helically wound around an outer periphery of a hard reinforcing member in turn helically wound around an inner layer of the hose and united with the inner layer, for passing a fluid therethrough.

11. The use according to claim 10, wherein the fluid is water or air.

12. The use according to claim 11, comprising draining water from an air conditioner.

13. The use according to one of claims 10 to 12, comprising bending the hose, in particular so as to fit in a limited or restricted piping space.

14. The use according to one of claims 10 to 13, wherein the hose is the one according to claim 5 or 6.

15. The use according to one of claims 10 to 14, wherein the hose is manufactured according to one of claims 1 to 4.
